# EUROPÄISCHE PATENTANMELDUNG

(11) **EP 4 822 474 A1**
(43) Veröffentlichungstag der Anmeldung: **14.10.2026**
(21) Anmeldenummer: 25169990.6
(22) Anmeldetag: 11.04.2025
(51) Int. Cl.: G05D 1/243, G05D 1/246, G05D 1/633, G05D 101/20, G05D 105/28, G05D 107/70, G05D 109/10, G05D 111/10, G06V 20/00

(54) **VORRICHTUNG UND VERFAHREN ZUR FAHRWEGPLANUNG EINES AUTONOM FAHRENDEN FAHRZEUGS**

(71) Anmelder: SICK AG, 79183 Waldkirch (DE)
(72) Erfinder: Schwer, Felix, 79104 Freiburg (DE); Gehring, Tobias, 79215 Elzach (DE)
(74) Vertreter: Manitz Finsterwald Patent- und Rechtsanwaltspartnerschaft mbB

(57) **Zusammenfassung**

Eine Vorrichtung zur Fahrwegplanung eines autonom fahrenden Fahrzeugs umfasst eine Sensoreinheit, ausgebildet, Sensordaten einer Umgebung eines autonom fahrenden Fahrzeugs zu empfangen. Die Vorrichtung umfasst ferner eine Steuer- und Datenverarbeitungseinheit, ausgebildet, zumindest ein Objekt basierend auf den Sensordaten zu bestimmen und in eine Objektklasse zu klassifizieren. Die Steuer- und Datenverarbeitungseinheit ist ferner ausgebildet, ein Umgebungsmodell basierend auf den Sensordaten zu erstellen, wobei das zumindest eine Objekt an einer ersten Position des zumindest einen Objekts zu einem ersten Zeitpunkt in das Umgebungsmodell eingebettet ist. Ein Positionsbereich des zumindest einen Objekts zu einem zweiten Zeitpunkt wird mittels der Steuer- und Datenverarbeitungseinheit in dem Umgebungsmodell basierend auf einem Objektmodell des zumindest einen Objekts bestimmt und ein Fahrweg des autonom fahrenden Fahrzeugs wird bestimmt, wobei der Fahrweg überschneidungsfrei zu dem Positionsbereich des zumindest einen Objekts verläuft. Basierend auf dem Fahrweg werden mittels der Steuer- und Datenverarbeitungseinheit Steuersignale für eine Navigation des autonom fahrenden Fahrzeugs erzeugt.

## Beschreibung

Die Erfindung betrifft eine Vorrichtung und ein Verfahren zur Fahrwegplanung eines autonom fahrenden Fahrzeugs, insbesondere eines fahrerlosen Transportfahrzeugs, unter Berücksichtigung von Objekten in der Umgebung des autonom fahrenden Fahrzeugs.

Eine Herausforderung bei der Fahrwegplanung eines autonom fahrenden Fahrzeugs kann darin bestehen, dass das Fahrzeug in der Lage sein muss, auf Veränderungen in der Umgebung des Fahrzeugs zu reagieren und dabei einen Fahrweg zu planen, der Kollisionen mit anderen Objekten verhindert. Dazu ist eine präzise Erkennung und Klassifizierung von Objekten in der Fahrzeugumgebung sowie eine genaue Vorhersage ihrer Bewegungen notwendig.

Menschen oder Gegenstände im Fahrweg eines fahrerlosen Transportfahrzeugs (AGV/AGC) können die Prozessverfügbarkeit des Fahrzeugs einschränken, da das Fahrzeug entweder seine Fahrgeschwindigkeit reduziert oder anhält sobald ein Hindernis, beispielsweise ein Mensch oder ein Gegenstand im Fahrweg erkannt wurde.

Es ist daher die Aufgabe der hier vorliegenden Erfindung, die Verfügbarkeit eines autonom fahrenden Fahrzeugs, insbesondere eines fahrerlosen Transportfahrzeugs, zu verbessern.

Die Aufgabe wird durch eine Vorrichtung zur Fahrwegplanung eines autonom fahrenden Fahrzeugs gemäß Anspruch 1, durch ein Verfahren zur Fahrwegplanung eines autonom fahrenden Fahrzeugs gemäß Anspruch 14 und durch ein autonom fahrendes Fahrzeug gemäß Anspruch 15 gelöst. Vorteilhafte Ausführungsformen der Vorrichtung und des Verfahrens sind in den Unteransprüchen, der Beschreibung und den Zeichnungen dargestellt.

Die erfindungsgemäße Vorrichtung dient zur Fahrwegplanung eines autonom fahrenden Fahrzeugs. Die Vorrichtung umfasst eine Sensoreinheit und eine Steuer- und Datenverarbeitungseinheit. Die Sensoreinheit ist dazu ausgebildet, Sensordaten einer Umgebung eines autonom fahrenden Fahrzeugs zu empfangen. Die Steuer- und Datenverarbeitungseinheit ist dazu ausgebildet, zumindest ein Objekt basierend auf den Sensordaten zu bestimmen und in eine Objektklasse zu klassifizieren. Die Steuer- und Datenverarbeitungseinheit ist ferner dazu ausgebildet, ein Umgebungsmodell basierend auf den Sensordaten zu erstellen, wobei das zumindest eine Objekt an einer ersten Position des zumindest einen Objekts zu einem ersten Zeitpunkt in das Umgebungsmodell eingebettet ist. Ein Positionsbereich des zumindest einen Objekts zu einem zweiten Zeitpunkt wird mittels der Steuer- und Datenverarbeitungseinheit in dem Umgebungsmodell basierend auf einem Objektmodell des zumindest einen Objekts bestimmt. Die Steuer- und Datenverarbeitungseinheit ist auch dazu ausgebildet, einen Fahrweg des autonom fahrenden Fahrzeugs zu bestimmen und Steuersignale für eine Navigation des autonom fahrenden Fahrzeugs basierend auf dem Fahrweg zu erzeugen, wobei der Fahrweg überschneidungsfrei zu dem Positionsbereich des zumindest einen Objekts verläuft. Der Fahrweg des autonom fahrenden Fahrzeugs kann so bestimmt werden, dass ein einstellbarer Sicherheitsabstand zwischen dem autonom fahrenden Fahrzeug und dem zumindest einen Objekt entlang des Fahrwegs eingehalten wird.

Ein Fahrweg des autonom fahrenden Fahrzeugs kann eine (Fahrzeug-)Trajektorie beschreiben, entlang derer das autonom fahrende Fahrzeug von einem Startpunkt, beispielsweise die erste Position des autonom fahrenden Fahrzeugs, zu einem Zielpunkt, beispielsweise die Position des autonom fahrenden Fahrzeugs zu einem zweiten Zeitpunkt fährt, wobei der zweite Zeitpunkt zeitlich später ist als der erste Zeitpunkt. Der erste Zeitpunkt und der zweite Zeitpunkt können diskrete Zeitpunkte sein, z. B. äquidistante Zeitpunkte.

Der Fahrweg kann auch eine Trajektorie beschreiben, die nur von einem Teil des autonom fahrenden Fahrzeugs abgefahren wird, beispielsweise eine (Arm-)Trajektorie eines Roboterarms. Der Rotor kann selbst statisch an einem festen Ort stehen und nur ein Arm oder ein Teil des Roboters bewegt sich entlang des Fahrwegs.

Der Fahrweg kann auch eine kombinierte Trajektorie sein, z.B. eine Kombination aus einer Fahrzeugtrajektorie und einer Armtrajektorie. Eine solche Kombination kann sich beispielsweise ergeben, wenn ein Roboter sowohl einen Arm als auch sich selbst bewegt oder wenn ein stationärer Roboter auf einem mobilen Roboter angeordnet ist und sich beide Roboter bewegen.

Die Vorrichtung kann an einem autonom fahrenden Fahrzeug angeordnet sein. Somit kann die Umgebung der Vorrichtung einer Umgebung des autonom fahrenden Fahrzeugs entsprechen. Insbesondere kann die Umgebung durch die Sensoreinheit, insbesondere durch einen oder mehrere Sensoren der Sensoreinheit, erfasst werden. Die Sensordaten können von einer Kamera erfasst werden, wobei die Sensordaten ein zwei- oder dreidimensionales Bild mit RGB-Kanälen für Farbinformationen sein können. Die Sensordaten können auch von einem Lidar Sensor erfasst werden, wobei die Sensordaten Laufzeitinformationen (Time-of-Flight Informationen) umfassen können.

Ein Objekt kann ein Gegenstand oder einen Mensch sein, der sich in der Umgebung, d.h. vor, hinter, über, unter oder neben der Vorrichtung bzw. dem autonom fahrenden Fahrzeug befindet. Das Objektmodell kann ein Verhalten des Objekts simulieren, beispielsweise eine Bewegung des Objekts. Insbesondere kann das Objektmodell eine Position des Objekts oder einen Positionsbereich des Objekts in der Umgebung der Vorrichtung bzw. des autonom fahrenden Fahrzeugs zu einem zukünftigen Zeitpunkt bestimmen, wobei die Bestimmung der Position des Objekts oder des Positionsbereichs des Objekts basierend auf einem Prognostizieren des Verhaltens des zumindest einen Objekts erfolgen kann.

Das Umgebungsmodell kann einen aktuellen Status der Umgebung und einen oder mehrere zukünftige Stati der Umgebung der Vorrichtung, insbesondere des autonom fahrenden Fahrzeugs, beschreiben. Der Status der Umgebung kann Positionen von Objekten in der Umgebung der Vorrichtung, eine Position der Vorrichtung in der Umgebung, sowie andere Zustände der Objekte und der Vorrichtung, beispielsweise eine Geschwindigkeit, eine Beschleunigung, eine Ausrichtung, einen Abstand und ähnliches der Objekte und der Vorrichtung oder zwischen den Objekten und der Vorrichtung beschreiben. Durch das Umgebungsmodell kann sowohl das Objekt als auch die Umgebung zu mehreren zukünftigen Zeitpunkten simuliert und zueinander in Beziehung gesetzt werden.

Die erste Position des zumindest einen Objekts kann eine Position im Raum bzw. in der Umgebung der Vorrichtung des zumindest einen Objekts, beispielsweise beschrieben durch kartesische Koordinaten in einem Sensorkoordinatensystem sein. Das Einbetten der ersten Position des zumindest einen Objekts in das Umgebungsmodell kann eine Abbildung der ersten Position in dem virtuellen Umgebungsmodell der realen ersten Position der Umgebung umfassen. Somit kann die Position und ein Abstand des Objekts zu der Vorrichtung in dem Umgebungsmodell dargestellt werden. Das Umgebungsmodell kann ständig, d.h. zu den diskreten Zeitpunkten auf Basis von Sensordaten der Sensoreinheit und/oder Simulationsdaten des Objektmodells aktualisiert werden.

Durch die Erstellung des Umgebungsmodells, das statische und dynamische Positionen von Objekten in der Umgebung der Vorrichtung bzw. des autonom fahrenden Fahrzeugs berücksichtigt, kann das autonom fahrende Fahrzeug proaktiv auf Veränderungen in seiner Umgebung reagieren, was die Effizienz der Fahrwegplanung steigert. Die Erzeugung von Steuersignalen für die Navigation des autonom fahrenden Fahrzeugs, die überschneidungsfrei zu den Positionsbereichen von Objekten verläuft, minimiert das Kollisionsrisiko und verbessert die Gesamtsicherheit des autonomen Fahrsystems ohne die Prozessverfügbarkeit einzuschränken.

In einer Ausführungsform umfasst die Steuer- und Datenverarbeitungseinheit zumindest ein neuronales Netz, dazu ausgebildet, das zumindest eine Objekt basierend auf den Sensordaten zu identifizieren bzw. zu bestimmen und in eine Objektklasse zu klassifizieren. Das neuronale Netz kann ein faltendes neuronales Netzwerk (convolutional neural network) sein. Es können verschiedene neuronale Netze verwendet werden, z.B.: Movenet, Yunet, Yolo, oder allgemeiner eine geeignete spezielle Kombination verschiedener Netze zum Labeln von Datensets in einem selbstüberwachten Lernansatz (self-supervised learning). Es können auch neuronale Netze verwendet werden, die Klassifizieren und Distanzen schätzen können, z.B. Dist-Yolo und DepthNet oder eine Kombination von DepthNet und Movenet. Das zumindest eine neuronale Netz kann trainiert oder nachtrainiert werden. Ein Trainingsdatensatz zum Trainieren des neuronalen Netzes einschließlich Schichten des neuronalen Netzes kann Eingangsdaten und entsprechende bekannte Ausgangsdaten enthalten. Die Eingangsdaten können eine Vielzahl von Bildern umfassen, z.B. Bilder mit Daten aus einem industriellen Umfeld, insbesondere Bildern aus einer echten Produktionsumgebung. Die Bilder können beispielsweise durch Kamera- und/oder Radar-/Lidar-Daten bestimmt werden und zumindest ein Objekt darstellen. Der Trainingsdatensatz kann auch auf Bildern von sich bewegenden Objekten basieren, die von einer Kamera, einem Radar- oder Lidar-Sensor aufgenommen wurden. Die Bilder können eine Vielzahl von Pixeln umfassen, wobei das zumindest eine Objekt einer Anzahl von Pixeln zugeordnet werden kann. Das zumindest eine Objekt kann ein Mensch, eine Palette, eine Box, ein statisches Hindernis, ein dynamisches Hindernis, ein Gegenstand, z.B. ein anderes autonom fahrendes Fahrzeug oder ein Gabelstapler, und ähnliches sein.

Die bekannten Ausgangsdaten können entsprechende Bilder sein, bei denen das zumindest eine Objekt bekannt und gelabelt, d.h. einer Objektklasse zugeordnet ist. Die Objektklassen können die Objektklasse "Mensch", die Objektklasse "Palette", die Objektklasse "Box", die Objektklasse "statisches Hindernis", die Objektklasse "dynamisches Hindernis" oder ähnliche Objektklassen umfassen. Die Bilder der Eingangsdaten und die Bilder der Ausgangsdaten können somit in einzelne referenzierbare Objekte verschiedener Objektklassen zerlegt werden.

Das neuronale Netz kann auf der Grundlage der Eingangsdaten ein Ergebnis erzeugen, das dann mit den bekannten Ausgangsdaten verglichen werden kann. Insbesondere können die in den Bildern bekannten Objekte und eine bekannte Klassifizierung der Objekte in den Ausgangsdaten, d.h. die bekannte Zuordnung der Objekte zu den Objektklassen in den Bildern der Ausgangsdaten, mit durch das neuronale Netz erkannten Objekte und einer durch das neuronale Netz erzeugten Klassifizierung der erkannten Objekte basierend auf den Eingangsdaten, verglichen werden. Auf der Grundlage des Ergebnisses können die Parameter für jede Schicht des neuronalen Netzes angepasst werden.

Die Verwendung eines neuronalen Netzes innerhalb der Steuer- und Datenverarbeitungseinheit kann eine Verbesserung der Mustererkennung und Lernfähigkeit ermöglichen, was zu einer genaueren Objektklassifizierung führen kann. Zudem können durch neuronale Netze große Mengen an Sensordaten effizient verarbeitet werden, was die Reaktionszeit des Systems verkürzen und die Echtzeitfähigkeit der Fahrwegplanung verbessern kann. Durch das Training des neuronalen Netzes mit einer Vielzahl von Szenarien kann das System kontinuierlich verbessert werden, was zu einer adaptiven Lösung für die Fahrwegplanung beitragen kann.

Alternativ oder zusätzlich kann das zumindest eine Objekt auch durch geeignete Bildverarbeitungsalgorithmen oder Systeme erkannt und/oder klassifiziert werden.

In einer Ausführungsform ist die Steuer- und Datenverarbeitungseinheit dazu ausgebildet, mittels des Objektmodells zusätzliche Informationen des zumindest einen Objekts zu bestimmen. Die zusätzlichen Information des zumindest einen Objekts können abhängig von der Objektklasse des zumindest einen Objekts sein.

Die zusätzlichen Information einer Objektklasse "Mensch" können zumindest eine der folgenden Informationen umfassen: Position der Gelenke und zusammengehörige Gelenke einer Person, Größe der Person, Breite der Person, Position eines Gesichts der Person, Höhe und Breite des Gesichts, Ausrichtung des Gesichts, Position der Gliedmaßen, Ausrichtung der Gliedmaßen, Position der Hände, Ausrichtung der Hände und ähnliche Informationen.

Die zusätzlichen Information einer Objektklasse "Palette" können zumindest eine der folgenden Informationen umfassen: Höhe einer Palette, Breite eine Palette, Positionen von Palettenaussparungen (Pallet Pockets), Beladungszustand der Palette (z.B. beladen, unbeladen, Höhe der Beladung), und ähnliche Informationen.

Die zusätzlichen Information einer Objektklasse "statisches Hindernis" können zumindest eine der folgenden Informationen umfassen: Höhe eines statischen Hindernisses, Breite des statischen Hindernisses, Länge des statischen Hindernisses, Aufdruck auf dem statischen Hindernis, Farbe des statischen Hindernisses, Form des statischen Hindernisses, Volumen des statischen Hindernisses, und ähnliche Informationen.

Die zusätzlichen Information einer Objektklasse "dynamisches Hindernis" können zumindest eine der folgenden Informationen umfassen: Höhe eines dynamischen Hindernisses, Breite des dynamischen Hindernisses, Länge des dynamischen Hindernisses, Aufdruck auf dem dynamischen Hindernis, Farbe des dynamischen Hindernisses, Form des dynamischen Hindernisses, Volumen des dynamischen Hindernisses, Geschwindigkeit des dynamischen Hindernisses, Ausrichtung des dynamischen Hindernisses, und ähnliche Informationen.

Die Fähigkeit, mittels des Objektmodells zusätzliche Informationen zu bestimmen, kann eine umfassendere Beurteilung der Umgebung erlauben, was zu einer verbesserten Entscheidungsfindung bei der Fahrwegplanung führen kann. Ferner können die zusätzlichen Informationen über Objekte zur Vorhersage von Verhaltensmustern genutzt werden, was die Antizipation von zukünftigen Bewegungen der Objekte ermöglichen und die Sicherheit erhöhen kann.

In einer Ausführungsform umfasst das Objektmodell ein neuronales Netz. Das neuronale Netz kann zum Bestimmen der zusätzlichen Informationen verwendet werden und gleich oder verschieden zu dem neuronalen Netz zur Erkennung und Klassifizierung des zumindest einen Objekts sein. Das neuronale Netz zum Bestimmen der zusätzlichen Informationen kann eines der folgenden neuronalen Netze sein: Depth-Anything, DepthNet, Segment Anything, Movenet, OpenPose, oder mehrere davon.

Ein Trainingsdatensatz zum Trainieren des neuronalen Netzes einschließlich Schichten des neuronalen Netzes kann Eingangsdaten und entsprechende bekannte Ausgangsdaten enthalten. Die Eingangsdaten können eine Vielzahl von Bildern umfassen, z.B. Bilder mit Daten aus einem industriellen Umfeld, insbesondere Bildern aus einer echten Produktionsumgebung. Die Bilder können beispielsweise durch Kamera- und/oder Radar-/Lidar-Daten bestimmt werden und zumindest ein Objekt darstellen. Der Trainingsdatensatz kann auch auf Bildern von sich bewegenden Objekten basieren, die von einer Kamera, einem Radar- oder Lidar-Sensor aufgenommen wurden. Die Bilder können eine Vielzahl von Pixeln umfassen, wobei das zumindest eine Objekt einer Anzahl von Pixeln zugeordnet werden kann. Das zumindest eine Objekt kann ein Mensch, eine Palette, eine Box, ein statisches Hindernis, ein dynamisches Hindernis, ein Gegenstand, z.B. ein anderes autonom fahrendes Fahrzeug oder ein Gabelstapler, und ähnliches sein.

Die bekannten Ausgangsdaten können entsprechende Bilder sein, bei denen das zumindest eine Objekt bekannt und gelabelt, d.h. einer Objektklasse zugeordnet ist. Für die bekannten und gelabelten Objekte in den Bildern der Ausgangsdaten können die zusätzlichen Informationen bekannt sein. Beispielsweise können als zusätzliche Informationen der Objekte in der Objektklasse "Mensch" die Merkmale Position der Gelenke und zusammengehörige Gelenke, Höhe des Menschen, Breite des Menschen, Position des Gesichts, Höhe und Breite des Gesichts, Ausrichtung des Gesichts (von rechts, von links, von vorne) usw. bekannt sein. Es versteht sich, dass für andere Objekte in anderen Objektklassen andere zusätzliche Informationen der anderen Objekte in den Ausgangsdaten bekannt sein können. Insbesondere die hierin beschriebenen zusätzlichen Information der jeweiligen Objekte in den jeweiligen Objektklassen.

Das neuronale Netz kann auf der Grundlage der Eingangsdaten ein Ergebnis erzeugen, das dann mit den bekannten Ausgangsdaten verglichen werden kann. Insbesondere können die zu den Bildern in den Ausgangsdaten bekannten zusätzlichen Informationen der Objekte mit durch das neuronale Netz ermittelten zusätzlichen Informationen der Objekte basierend auf den Bildern der Eingangsdaten verglichen werden. Auf der Grundlage des Ergebnisses können die Parameter für jede Schicht des neuronalen Netzes angepasst werden.

Die Implementierung eines neuronalen Netzes in dem Objektmodell kann die Verarbeitung komplexer und unstrukturierter Daten erleichtern, was die Robustheit gegenüber variablen Umgebungsbedingungen erhöhen kann. Durch die Nutzung eines neuronalen Netzes kann das Objektmodell kontinuierlich aus Erfahrungen lernen und sich an neue Situationen anpassen, was die Langzeitstabilität und Effektivität der Fahrwegplanung verbessern kann.

In einer Ausführungsform ist die Steuer- und Datenverarbeitungseinheit dazu ausgebildet, die zusätzlichen Informationen mittels des Objektmodells basierend auf Daten einer Wissensdatenbank zu dem zumindest einen Objekt zu bestimmen. Die Wissensdatenbank kann Vorwissen zu dem zumindest einen Objekt, Regeln, Vergleichsdaten, Schätzungen oder statistischen Annahmen umfassen. Die Wissensdatenbank kann zum Beispiel Regeln für eine erkannte Person der Objektklasse "Mensch" umfassen und diese Regeln als Eingangsgröße in das Objektmodell, beispielsweise in ein statisches regelbasiertes Objektmodel oder in ein KI-basiertes (auf künstlicher Intelligenz basiertes) Vorhersagemodell für menschliche Bewegungen (human trajectory prediction), übermitteln. Eine Regel für die Objektklasse "Mensch" könnte beispielsweise sein: eine Person ist nicht schneller als 1Gm/s. Ein weiteres Bespiel einer Regel für die Objektklasse "Mensch" könnte lauten: eine Person bewegt sich häufiger und schneller Vorwärts als Rückwärts. Das Objektmodell kann basierend auf den Regeln eine Bewegung der erkannten Person simulieren, d.h. vorhersagen und somit den Positionsbereich der Person zu einem zukünftigen Zeitpunkt, beispielsweise dem zweiten Zeitpunkt ermitteln. Der Positionsbereich kann einen Bereich oder Linien angeben der oder die zu umfahren sind.

Die Verwendung von Daten aus einer Wissensdatenbank kann es der Steuer- und Datenverarbeitungseinheit ermöglichen, fundierte Entscheidungen zu treffen, indem sie auf eine umfangreiche Sammlung von Informationen über Objekte zugreift. Die Kombination des Objektmodells mit einer Wissensdatenbank kann somit die Genauigkeit des zu bestimmenden Positionsbereichs erhöhen, was zu einer verbesserten Risikobewertung und Entscheidungsfindung für die Fahrwegplanung führen kann.

In einer Ausführungsform umfassen die zusätzlichen Informationen eine Distanzschätzung der Vorrichtung zu dem zumindest einen Objekt. Die Distanzschätzung kann eine Abstand oder eine Entfernung zwischen einer Position der Vorrichtung und einer Position des zumindest einen Objekts umfassen, insbesondere zu einem Zeitpunkt.

Die Bereitstellung einer Distanzschätzung kann eine verbesserte räumliche Wahrnehmung der Umgebung durch die Vorrichtung ermöglichen, was zu einer präziseren Fahrwegermittlung führen kann. Durch die Kenntnis der Entfernung der Vorrichtung, insbesondere des autonom fahrenden Fahrzeugs, zu Objekten in der Umgebung des Fahrzeugs oder der Vorrichtung kann die Vorrichtung sicherheitsrelevante Entscheidungen treffen, wie beispielsweise das Einleiten von Ausweichmanövern entlang des Fahrwegs, um um die Objekte herum zu fahren und Kollisionen mit den Objekten aber auch ein Anhalten des autonom fahrenden Fahrzeugs zu vermeiden.

In einer Ausführungsform erfolgt die Distanzschätzung mittels einer monokularen Tiefenschätzung. Die Verwendung einer monokularen Tiefenschätzung (engl. monocular distance estimation) ermöglicht eine kosteneffiziente Lösung der Distanzschätzung, da nur eine einzelne Kamera benötigt wird, anstatt komplexerer Stereokamerasysteme oder anderer Sensoren. Die monokulare Tiefenschätzung kann durch Software-Algorithmen realisiert werden, was die Flexibilität erhöht und die Möglichkeit bietet, die Leistung durch Software-Updates zu verbessern.

In einer Ausführungsform ist die Steuer- und Datenverarbeitungseinheit dazu ausgebildet, eine erste Position der Vorrichtung zu dem ersten Zeitpunkt und eine zweite Position der Vorrichtung zu dem zweiten Zeitpunkt zu bestimmen. Die erste Position der Vorrichtung zu dem ersten Zeitpunkt kann mittels Sensordaten, insbesondere Sensordaten eines Positionssensors (z.B. GPS), bestimmt werden. Die erste Position der Vorrichtung zu dem ersten Zeitpunkt kann auch mittels Odometriedaten oder Ultra-Breitband-Daten (UWB-Daten), einem Barcode, einem Magnetstreifen oder ähnlichem bestimmt werden.

Die Position der Vorrichtung kann einer Position des autonom fahrenden Fahrzeugs entsprechen, da die Vorrichtung an dem autonom fahrenden Fahrzeug angeordnet sein kann. Die Position der Vorrichtung kann auch eine von der Position des autonom fahrenden Fahrzeugs abgeleitete Position sein, da eine feste geometrische Beziehung zwischen der Vorrichtung und dem Fahrzeug besteht. Die zweite Position der Vorrichtung zu dem zweiten Zeitpunkt kann basierend auf Vorrichtungsdaten oder Fahrzeugdaten, beispielsweise einer Geschwindigkeit oder einer Beschleunigung sowie einer Ausrichtung der Vorrichtung oder des Fahrzeugs ermittelt werden.

Die Bestimmung von zumindest zwei Positionen der Vorrichtung zu unterschiedlichen Zeitpunkten kann eine genaue Berechnung der Bewegung und Geschwindigkeit der Vorrichtung ermöglichen, was für die Steuerung und Navigation vorteilhaft ist. Durch die Kenntnis der Positionsveränderung über die Zeit kann die Vorrichtung ihre eigene Trajektorie, d.h. den Fahrweg optimieren und somit effizienter und energiesparender agieren.

In einer Ausführungsform ist die Steuer- und Datenverarbeitungseinheit dazu ausgebildet, den Fahrweg des autonom fahrenden Fahrzeugs basierend auf der ersten Position und/oder der zweiten Position der Vorrichtung sowie einer Distanzschätzung der Vorrichtung zu dem zumindest einen Objekt und einer Ausrichtung der Vorrichtung zu dem zumindest einen Objekt zu bestimmen.

Die Berücksichtigung von Position, Abstand und Ausrichtung der Vorrichtung zu Objekten kann eine umfassende Situationsanalyse und eine darauf basierende präzise Fahrwegbestimmung ermöglichen. Die adaptive Fahrwegbestimmung unter Einbeziehung dynamischer Umgebungsdaten, beispielsweise sich ständig ändernde Distanzen zwischen der Vorrichtung und Objekten in der Umgebung der Vorrichtung, kann eine flexible Anpassung an unvorhergesehene Ereignisse ermöglichen und zu einer verbesserten Autonomie des Fahrzeugs führen.

In einer Ausführungsform ist die Steuer- und Datenverarbeitungseinheit dazu ausgebildet, die erste Position des zumindest einen Objekts zu dem ersten Zeitpunkt und eine zweite Position des zumindest einen Objekts zu dem zweiten Zeitpunkt zu bestimmen, wobei die erste Position des zumindest einen Objekts basierend auf den Sensordaten und die zweite Position des zumindest einen Objekts mittels des Objektmodells bestimmt werden.

Die Bestimmung der Positionen eines Objekts zu verschiedenen Zeitpunkten ermöglicht eine Vorhersage der Bewegungsbahn des Objekts, was für die Kollisionsvermeidung mit dem Objekt entscheidend ist. Die Verwendung von Sensordaten und Objektmodellen zur Positionsbestimmung kann zudem die Genauigkeit und Zuverlässigkeit der erfassten Informationen über das Objekt erhöhen.

In einer Ausführungsform ist die Steuer- und Datenverarbeitungseinheit dazu ausgebildet, den Positionsbereich basierend auf der zweiten Position des zumindest einen Objekts und Fehlertoleranzen zu bestimmen. Die Fehlertoleranzen können Abweichungen in den Sensordaten, insbesondere in einer Bildaufnahme durch eine Kamera, Abweichungen in den zusätzlichen Informationen, Abweichungen in der Bewegungssimulation der Objekte und/oder Abweichungen in der Modellierung des Umgebungsmodells umfassen.

Die Fähigkeit der Steuer- und Datenverarbeitungseinheit, den Positionsbereich unter Berücksichtigung von Fehlertoleranzen zu bestimmen, kann die Zuverlässigkeit der Positionsbestimmung erhöhen und ein Risiko von Kollisionen durch ungenaue Fahrwegplanung minimieren. Die Berücksichtigung von Fehlertoleranzen kann eine sicherere Fahrwegplanung ermöglichen, da die Steuer- und Datenverarbeitungseinheit in der Lage ist, Unsicherheiten in der Positionsbestimmung des zumindest einen Objekts zu dem zweiten Zeitpunkt zu kompensieren und somit eine sicherere Navigation zu ermöglichen.

In einer Ausführungsform umfasst das Umgebungsmodell eine Position der Vorrichtung, insbesondere eine Position des autonom fahrenden Fahrzeugs, und eine Distanzschätzung zwischen der Position der Vorrichtung und dem zumindest einen Objekt. Die Einbeziehung der Position der Vorrichtung und der Distanzschätzung zu Objekten im Umgebungsmodell kann eine präzise Selbstlokalisierung des Fahrzeugs ermöglichen, was für die Fahrwegermittlung vorteilhaft sein kann.

In einer Ausführungsform umfasst die Sensoreinheit einen oder mehrere Sensoren, insbesondere optoelektronische Sensoren. Die Sensoreinheit kann bildgebende Sensoren wie beispielsweise eine 2D-Kamera oder eine 3D Kamera umfassen. Die Sensoreinheit kann auch einen Lidar Sensor umfassen.

Die Verwendung von optoelektronischen Sensoren in der Sensoreinheit kann eine hochauflösende und genaue Erfassung der Umgebung ermöglichen, was zu einer verbesserten Objekterkennung und Klassifizierung führen kann. Optoelektronische Sensoren bieten eine hohe Zuverlässigkeit unter verschiedenen Lichtbedingungen, was die Leistungsfähigkeit des autonom fahrenden Fahrzeugs in unterschiedlichen Umgebungen und zu verschiedenen Tageszeiten verbessern kann.

Ein weiterer Aspekt der Erfindung betrifft ein Verfahren zur Fahrwegplanung eines autonom fahrenden Fahrzeugs. Das Verfahren umfasst die folgenden Schritte: Empfangen, mittels einer Sensoreinheit, von Sensordaten einer Umgebung eines autonom fahrenden Fahrzeugs; Bestimmen zumindest eines Objekts und klassifizieren des zumindest einen Objekts in eine Objektklasse, mittels einer Steuer- und Datenverarbeitungseinheit, basierend auf den Sensordaten; Erstellen, mittels der Steuer- und Datenverarbeitungseinheit, eines Umgebungsmodells basierend auf den Sensordaten, wobei das zumindest eine Objekt an einer ersten Position des zumindest einen Objekts zu einem ersten Zeitpunkt in das Umgebungsmodell eingebettet ist; Bestimmen, mittels der Steuer- und Datenverarbeitungseinheit, eines Positionsbereich des zumindest einen Objekts zu einem zweiten Zeitpunkt in dem Umgebungsmodell basierend auf einem Objektmodell des zumindest einen Objekts; Bestimmen, mittels der Steuer- und Datenverarbeitungseinheit, eines Fahrwegs des autonom fahrenden Fahrzeugs, wobei der Fahrweg überschneidungsfrei zu dem Positionsbereich des zumindest einen Objekts verläuft; und Erzeugen, mittels der Steuer- und Datenverarbeitungseinheit, von Steuersignalen für eine Navigation des autonom fahrenden Fahrzeugs basierend auf dem Fahrweg.

Das Verfahren ermöglicht eine proaktive Fahrwegplanung, indem es die Position von Objekten zu einem zukünftigen Zeitpunkt vorhersagt und dadurch die Reaktionszeit des Fahrzeugs auf unerwartete Ereignisse verbessert. Durch die Erzeugung von Steuersignalen für die Navigation auf Basis des geplanten Fahrwegs kann das Fahrzeug autonom und effizient navigieren, was die Notwendigkeit menschlicher Eingriffe reduziert und die Betriebssicherheit erhöht.

Ein weiterer Aspekt der Erfindung betrifft ein autonom fahrendes Fahrzeug, insbesondere in Form eines fahrerlosen Transportfahrzeugs, wobei das autonom fahrende Fahrzeug eine Vorrichtung wie hierin beschrieben umfasst. Die Ausgestaltung des autonom fahrenden Fahrzeugs als fahrerloses Transportfahrzeug kann eine Reduzierung der Betriebskosten ermöglichen, da kein Fahrer benötigt wird und das Fahrzeug rund um die Uhr eingesetzt werden kann.

Ein weiterer Aspekt der Erfindung betrifft ein Fahrzeug, das jede Art von automatisch gesteuertem Fahrzeug (automated guided vehicle, AGV) oder ein teilautomatisiertes Fahrzeug sein kann. Es ist auch denkbar, dass unter dem Fahrzeug lediglich ein Navigationssystem zu verstehen ist, das einem Fahrer eines nicht autonom fahrenden Fahrzeugs einen Routenvorschlag anzeigt und der Fahrer gemäß dem Routenvorschlag das Fahrzeug steuert. Das Fahrzeug umfasst zumindest eine Vorrichtung zur Fahrwegplanung des autonom fahrenden Fahrzeugs wie hierin beschrieben. Über die Sensoreinheit kann das Fahrzeug Informationen über die Umgebung des Fahrzeugs beziehen, um kollisions- und unterbrechungsfrei von einem Punkt (Startpunkt) zu einem anderen Punkt (Zielpunkt) navigieren zu können.

Nachfolgend wird die Erfindung rein beispielhaft unter Bezugnahme auf die Zeichnungen beschrieben. Es zeigen:
- Figur 1: eine schematische Darstellung einer Fahrwegplanung eines autonom fahrenden Fahrzeugs;
- Figur 2: ein Ausführungsbeispiel einer erfindungsgemäßen Vorrichtung zur Fahrwegplanung eines autonom fahrenden Fahrzeugs;
- Figur 3: ein Ausführungsbeispiel eines Blockdiagramms zur Fahrwegplanung eines autonom fahrenden Fahrzeugs;
- Figur 4: ein Ausführungsbeispiel einer Systemarchitektur zur Fahrwegplanung eines autonom fahrenden Fahrzeugs; und
- Figur 5: ein Flussdiagramm, welches ein Verfahren zur Fahrwegplanung eines autonom fahrenden Fahrzeugs beschreibt.

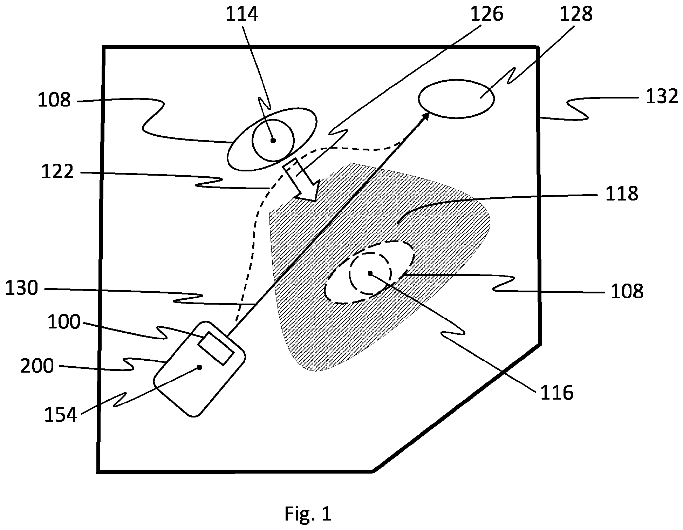

Figur 1 zeigt eine schematische Darstellung einer Fahrwegplanung eines autonom fahrenden Fahrzeugs 200. Das autonom fahrende Fahrzeug 200 kann als fahrerloses Transportfahrzeug ausgebildet sein. Eine erfindungsgemäße Vorrichtung 100 zur Fahrwegplanung des autonom fahrenden Fahrzeugs 200 ist an dem Fahrzeug 200 angebracht.

In einer Umgebung 132 des Fahrzeugs 200, beispielsweise ein Raum in einem industriellen Umfeld, befindet sich vor dem Fahrzeug 200 ein Objekt 108, als eine Person dargestellt. Das Fahrzeug 200 kann von einer ersten Position 154 zu einem ersten Zeitpunkt (t0=0) entlang eines ursprünglich geplanten Fahrwegs 130 zu einem Zielpunkt 128 fahren. Wie in Figur 1 gezeigt, befindet sich die Person zu dem ersten Zeitpunkt an einer ersten Position 114, die nicht in dem ursprünglichen Fahrweg 130 liegt.

Die Person ist zu dem ersten Zeitpunkt jedoch so ausgerichtet, dass eine Blickrichtung 126 der Person in Richtung des ursprünglichen Fahrwegs 130 des Fahrzeugs 200 zeigt. Somit besteht die Gefahr, dass sich die Person in Richtung des ursprünglich geplanten Fahrwegs 130 des autonom fahrenden Fahrzeugs 200 bewegt und ein Kollision zwischen dem Fahrzeug 200 und der Person erfolgen kann.

Eine mögliche zweite Position 116 der Person bzw. des Objekts 108 zu einem zweiten Zeitpunkt (t1=1, t2=2, etc.) kann mittels der erfindungsgemäßen Vorrichtung 100 geschätzt bzw. simuliert werden, wie nachfolgend detailliert beschrieben wird. In der zweiten Position 116 des zumindest einen Objekts 108 zu dem zweiten Zeitpunkt kann festgestellt werden, ob es sich um dasselbe Objekt 108 handelt. Es kann zudem ein Positionsbereich 118 ermittelt werden, in dem sich das Objekt 108 bzw. die Person zu dem zweiten Zeitpunkt aufhalten kann.

Mittels der erfindungsgemäßen Vorrichtung 100 kann ein Fahrweg 122, insbesondere ein Ausweichpfad, des autonom fahrenden Fahrzeugs 200 bestimmt werden, der überschneidungsfrei zu dem geschätzten Positionsbereich 118 des Objekts 108 verläuft. Steuersignale für eine Navigation des autonom fahrenden Fahrzeugs 200 können basierend auf dem Fahrweg 122 erzeugt werden. Die Steuersignale können einen Aktor, beispielsweise eine Lenkung des autonom fahrenden Fahrzeugs 200 steuern und somit das autonom fahrende Fahrzeug 200 um den Positionsbereich 118 herum von der ersten Position 154 zu dem Zielpunkt 128 steuern, ohne dass das Fahrzeug 200 anhalten muss, um eine Kollision mit dem Objekt 108 zu vermeiden. Der Fahrweg 122 verläuft somit nicht durch den Positionsbereich 118 in dem sich die Person zu einem zukünftigen Zeitpunkt aufhalten kann. Eine Verfügbarkeit des autonom fahrenden Fahrzeugs 200 wird somit verbessert, da es zu keiner Unterbrechung der Fahrt des autonom fahrenden Fahrzeugs 200 zum Zielpunkt 128 kommt.

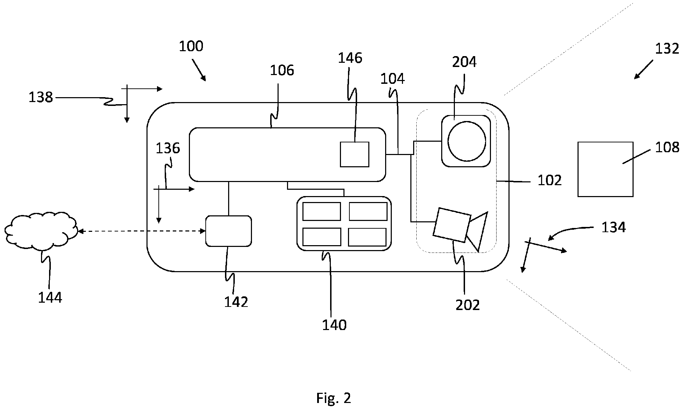

Figur 2 zeigt ein Ausführungsbeispiel der erfindungsgemäßen Vorrichtung 100 zur Fahrwegplanung eines autonom fahrenden Fahrzeugs 200. Die Vorrichtung 100 umfasst eine Sensoreinheit 102, die dazu ausgebildet ist, Sensordaten 104 einer Umgebung 132 der Vorrichtung 100, insbesondere in der Umgebung 132 eines autonom fahrenden Fahrzeugs 200 (siehe Fig. 1) zu empfangen. Die Sensoreinheit 102 kann einen oder mehrere Sensoren, insbesondere optoelektronische Sensoren, umfassen. Der optoelektronische Sensor kann als eine Kamera (CCD), als auch als Lidar Sensor ausgebildet sein.

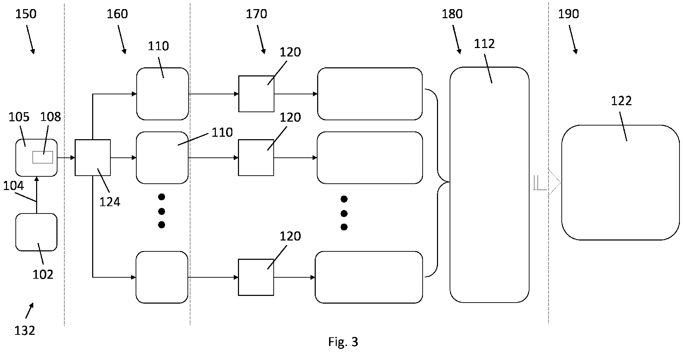

Die Vorrichtung 100 umfasst ferner eine Steuer- und Datenverarbeitungseinheit 106, dazu ausgebildet ist, zumindest ein Objekt 108 basierend auf den Sensordaten 104 zu bestimmen und in eine Objektklasse 110 (siehe Fig. 3) zu klassifizieren. Die Objektklassen 110 können vordefiniert sein und beispielsweise die Klassen "Mensch", "Palette", "Box", "statisches Hindernis" oder "dynamisches Hindernis" umfassen. Eine Unterscheidung zwischen einem statischen Objekt und einem dynamischen Objekt kann anhand einer Bewegung eines Objekts erfolgen. Die Bewegung des Objekts kann vorzugsweise auf der Auswertung des "image flow" von nacheinander aufgenommenen Sensordaten 104, insbesondere Bilddaten, detektiert werden. Es versteht sich, dass auch andere Verfahren zur Unterscheidung zwischen einem statischen Objekt und einem dynamischen Objekt verwendet werden können, zum Beispiel Verfahren aus dem Themengebiet "Objektverfolgung" (object tracking).

Die Steuer- und Datenverarbeitungseinheit 106 kann als eine Einheit ausgebildet sein. Es versteht sich jedoch, dass die Steuer- und Datenverarbeitungseinheit 106 auch als zweit getrennte Einheiten, eine Steuereinheit und eine Datenverarbeitungseinheit, ausgeführt sein können. Die von der Sensoreinheit 102 detektierten Objekte 108 können in einem Sensorkoordinatensystem 134 erfasst werden.

Eine Position der Vorrichtung 100 kann mittels einer Positionseinheit 140 der Vorrichtung 100 bestimmt werden. Die Positionseinheit 140 kann Positionssensoren wie z.B. GPS- oder Odometriesensoren umfassen. Die Position der Vorrichtung 100 kann basierend auf Positionsdaten wie beispielsweise GPS-Daten, Odometriedaten oder UWB-Daten ermittelt werden. In einer bevorzugten Ausführungsform kann mittels eines SLAM-Algorithmus eine Karte der Umgebung bzw. eines Raumes berechnet werden und in der Karte die Position der Vorrichtung 100 bzw. des autonom fahrenden Fahrzeugs 200 in Bezug auf ein Weltkoordinatensystem 138 ermittelt werden. In dieser Ausführung ist ein LIDAR Sensor notwendig, da der Lidar Sensor die Umgebungsdaten liefern kann.

Die Position der Vorrichtung kann alternativ auch mit Hilfe von Barcodes, Magnetstreifen, usw. mit Hilfe von Sensoren ermittelt werden. Die Position der Vorrichtung 100 kann in einem Vorrichtungskoordinatensystem 136 bestimmt werden.

Die Steuer- und Datenverarbeitungseinheit 106 ist ferner dazu ausgebildet, ein Umgebungsmodell 112 (siehe Fig. 3) basierend auf den Sensordaten 104 zu erstellen, wobei das zumindest eine Objekt 108 an einer ersten Position 114 (siehe Fig. 1) des zumindest einen Objekts 108 zu einem ersten Zeitpunkt in das Umgebungsmodell 112 eingebettet ist. Das Umgebungsmodell 112 kann zudem eine Position der Vorrichtung 100 umfassen, insbesondere eine Position des autonom fahrenden Fahrzeugs 200.

Zur Abbildung des zumindest einen Objekts 108 und der Position der Vorrichtung 100 in dem Umgebungsmodell 112 können die Koordinaten des zumindest einen Objekts 108 und der Position der Vorrichtung 100 in das Weltkoordinatensystem 138 umgerechnet werden. Hierzu kann die Vorrichtung eine Transformationseinheit 146 umfassen. Die Transformationseinheit 146 kann dazu ausgebildet sein, eine Position des zumindest einen Objekts 108 von dem Sensorkoordinatensystem 134 in das Weltkoordinatensystem 138 umzurechnen. Das Sensorkoordinatensystem 134 kann gegenüber dem Vorrichtungskoordinatensystem 136 gekippt oder gedreht sein, wobei die Transformationseinheit 146 einen Dreh- oder Kippwinkel des Sensorkoordinatensystems 134 bei der Umrechnung in das Weltkoordinatensystem 138 berücksichtigen kann. Die Transformationseinheit 146 kann ferner dazu ausgebildet sein, eine Position der Vorrichtung 100, insbesondere eine Position des Fahrzeugs 200, von dem Vorrichtungskoordinatensystem 136 in das Weltkoordinatensystem 138 umzurechnen.

Die Vorrichtung 100 kann eine Schnittstelle umfassen, zum Beispiel eine Kommunikationseinheit 142, die mit einem Cloud Server 144 verbunden ist. Über den Cloud Server 144 können beispielsweise eine Anpassung oder eine Aktualisierung der Vorrichtung 100 erfolgen. Beispielsweise können jeweilige Parameter einer Objektklasse 110, z. B. eines Körpermodells, aktualisiert werden. Mittels der Kommunikationseinheit 142 können auch neuronale Netze aktualisiert werden, die zur Bestimmung des Fahrwegs eingesetzt werden können wie nachfolgend näher beschrieben wird. Insbesondere kann in einer Ausführungsform ein "Labor Fahrzeug" in einer künstlichen Umgebung trainiert werden und die auf diese Weise trainierten oder nachtrainierten neuronalen Netze können über den Cloud Server 144 und die Kommunikationseinheit 142 der Vorrichtung 100 zur Verfügung gestellt werden.

Figur 3 zeigt ein Ausführungsbeispiel eines Blockdiagramms zur Fahrwegplanung eines autonom fahrenden Fahrzeugs 200. Das Blockdiagramm ist in folgende fünf Bereiche untereilt: Bildaufnahme 150, Objektklassifikation 160, Informationsverdichtung 170, Modellierung 180 und Simulation 190.

Die Bildaufnahme 150 erfolgt mittels geeignetem Sensorsystem, insbesondere der Sensoreinheit 102 bestehend aus einer oder mehrerer Sensoren als Interface zwischen der Umgebung 132 des autonom fahrenden Fahrzeugs 200 bzw. der Vorrichtung 100 und einer digitalen Domaine. Die Sensoreinheit 102 kann geeignete Sensorsysteme, beispielsweise bildgebende Sensorsysteme wie Kameras (2D, 3D, RGB, RGBD) umfassen. Die Sensoreinheit 102 ist ausgebildet, Sensordaten 104 der Umgebung 132 des autonom fahrenden Fahrzeugs 200 zu empfangen. Aus den Sensordaten 104 kann ein Bild 105, beispielsweise mittels der Steuer- und Datenverarbeitungseinheit 106 (siehe Fig. 2) erzeugt werden.

Die Steuer- und Datenverarbeitungseinheit 106 kann zumindest ein neuronales Netz 124 umfassen, dass dazu ausgebildet ist, ein Objekt 108 oder eine Vielzahl an Objekten 108 basierend auf den Sensordaten 104 in dem Bild 105 zu bestimmen und jedes Objekt 108 in jeweils eine Objektklasse 110 zu klassifizieren.

Die Klassifikation einzelner Objekte 108 in dem Bild 105 kann somit mittels künstlicher Intelligenz (Kl), insbesondere spezieller faltende neuronale Netze (convolutional neuronal networks) oder anderer Bildverarbeitungsalgorithmen und Systeme erfolgen. Das Bild 105 kann in einzelne referenzierbare Objekte 108 verschiedener Objektklassen 110 zerlegt und möglichst viel Information aus dem Bild 105 zu diesen Objekten 108 extrahiert werden.

Die Objektklassen 110 können bekannt oder vorbestimmt sein. Die Objektklassen 110 können beispielsweise umfassen: "Mensch", "Palette", "Box", "statisches Hindernis" oder "dynamisches Hindernis". Es ist auch möglich eine Objektklasse 110 für spezielle Objekte 110 oder Genstände, z.B. Gabelstapler, zu definieren. Die Klassifizierung der Objekte 108 kann zumindest die folgenden Merkmale umfassen: statisch / dynamisch, Person / Nicht-Person, Dimension, Anzahl, Farbe, Form, Aufdruck, etc.

Jede der Objektklasse 110 kann eine Vielzahl von Parametern umfassen, beispielsweise für die Objektlasse 110 "Mensch": Position der Gelenke und zusammengehörige Gelenke, Höhe, Breite, Position des Gesichts, Höhe und Breite des Gesichts, Ausrichtung des Gesichts (von rechts, von links, von vorne) usw.; für die Objektklasse 110 "Palette": Höhe, Breite, Pallet Pockets, beladen, unbeladen usw.; für die Objektklasse 110 "Box": Höhe, Breite, Länge, Aufdruck, Farbe, usw.; für die Objektklasse "statisches Hindernis": Höhe, Breite, Länge, Aufdruck, Farbe, Form, Volumen, usw.; und für die Objektklasse 110 "dynamisches Hindernis": Höhe, Breite, Länge, Aufdruck, Farbe, Form, Volumen, Geschwindigkeit, Ausrichtung usw.

In dem Bereich Informationsverdichtung 170 können den erkannten und in Objektklassen 110 klassifizierten Objekten 108 zusätzliche Informationen hinzugefügt werden. Insbesondere kann die Steuer- und Datenverarbeitungseinheit 106 dazu ausgebildet sein, mittels eines Objektmodells 120 die zusätzlichen Informationen des zumindest einen Objekts 108 zu bestimmen. Das Objektmodell 120 kann ein neuronales Netz umfassen.

Das Hinzufügen oder Anreichern der zusätzlichen Informationen kann auf Basis von Vergleichsdaten, Schätzungen, Umgebungsdaten, statistischen Annahmen, einer geeigneten Kombination von Daten oder generell jeder möglichen, geeigneten Art der Datenverarbeitung erfolgen.

Beispielsweise kann eine Positionsbestimmung des zumindest einen Objekts 108 bzw. eine Distanzschätzung zwischen einer Position des zumindest einen Objekts 108 und der Sensoreinheit 102 bzw. der Vorrichtung 100 als zusätzliche Information ermittelt werden. Die Positionsbestimmung bzw. Distanzschätzung kann beispielsweise, ein kartesisches Koordinatensystem vorausgesetzt, durch eine Ermittlung von x- und y-Position des zumindest einen Objekts 108 aus dem Bild 105 der Sensoreinheit 102 und mit Hilfe einer monokularen Tiefenschätzung (monocular distance estimation) erfolgen, welche eine Entfernung des Objekts 108 zur Kamera oder Sensoreinheit 102 schätzt. Eine mögliche monokularen Tiefenschätzung kann die Bestimmung der Entfernung auf Basis der Breite eines Gesichts in einem Referenzbild sein. Ein typisches Gesicht ist zwischen 13,5 cm und 17 cm breit. In dem Bild 105 kann bei gegebenen Kameraparametern beispielsweise ein Gesicht mit der Breite 100 Pixel erkannt werden. In dem Referenzbild entspricht ein "Normalgesicht" bei 1 Meter Entfernung 300 Pixel, folglich ist das zumindest eine Objekt 108 ca. 3 Meter von der Sensoreinheit 102 bzw. der Vorrichtung 100 entfernt. Es können auch andere Körpermaße wie beispielsweise eine Schulterbreite bzw. auch relativen Körpermaße wie beispielsweise Schulterbreite zu Oberarmlänge oder Schulterbreite zu Oberkörperlänge usw. für die Schätzung der Entfernung verwendet werden Dadurch kann die Schätzung robuster werden.

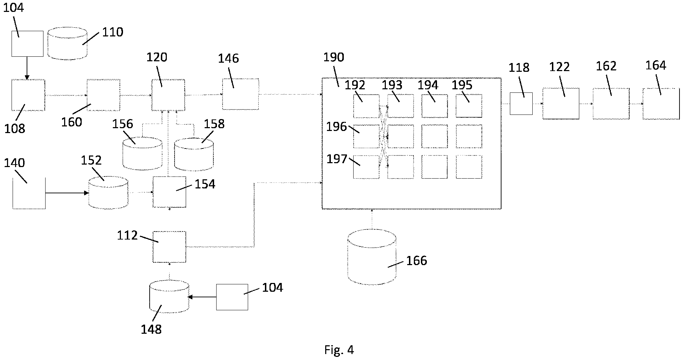

Die Informationsverdichtung 170 kann auch auf Basis von Daten einer Wissensdatenbank 158 (siehe Fig. 4) zu den durch Klassifizierung erzeugten Objekten 108 erfolgen. Insbesondere kann die Steuer- und Datenverarbeitungseinheit 106 dazu ausgebildet sein, die zusätzlichen Informationen mittels des Objektmodells 120 basierend auf Daten der Wissensdatenbank 158 zu dem zumindest einen Objekt 108 zu bestimmen.

Der Bereich Modellierung 180 beschreibt das Erstellen des Umgebungsmodells 112 basierend auf den Sensordaten 104 und das Einbetten des mit den zusätzlichen Informationen angereicherten Objekts 108 in das Umgebungsmodell 112. Das Umgebungsmodell 112 kann hierbei eine Abbildung der physikalischen Gegebenheiten in die digitale Domäne sein.

Jeder identifizierten Objektklasse 110 können weitere Teilmodelle der Objekte 108 hinterlegt werden. Beispielsweise kann für jede Objektklasse 110 ein Verhaltensmodell 156 (human behaviour model, siehe Fig. 4) vorhanden sein, welches eine Bewegung des Objekts 108 bestimmen bzw. simulieren kann. Das Verhaltensmodell 156 kann auf künstlicher Intelligenz beruhen, d.h. Al-basiert sein. Beispielsweise kann das Verhaltensmodell 156 ein neuronales Netz umfassen, welches trainiert werden kann und das Verhalten eines Objekts simulieren kann.

Es ist jedoch auch möglich, dass das Objekt 108 als statisch angenommen wird, wenn keine Vorhersagen über das Verhalten oder über eine Bewegung des Objekts 108 möglich ist.

Das Einbetten des Objekts 108 kann im Weltkoordinatensystem 138 (siehe Fig. 2) erfolgen. Beispielsweise kann anhand der Position in x-, y- und z-Richtung des Sensorkoordinatensystems 134 (siehe Fig. 2) und der Feststellung, dass es sich bei dem detektierten Objekt 108 um die Objektklasse 110 "Mensch" handelt, der Mensch oder die Person durch Transformation der x-, y- und z-Koordinaten der Person von dem Sensorkoordinatensystem 134 in das Weltkoordinatensystem 138 transformiert und in das Umgebungsmodell 112, welches einer digitalen Karte der Umgebung 132 entsprechen, eingebettet werden.

Für die Person, die nun im Weltkoordinatensystem 138 beschrieben ist, können einzelne Regeln hinterlegt werden, welche ein zukünftiges Verhalten der Person vorhersagen können, beispielsweise mit Hilfe des Verhaltensmodells 156. Die Regeln können zum Beispiel eine Maximalgeschwindigkeit oder eine Kontinuität in Geschwindigkeit und Ort, etc. umfassen.

Das Umgebungsmodell 112 kann einen aktuellen Status der Umgebung 132 der Vorrichtung 110, insbesondere einen aktuellen Status der Umgebung 132 des autonom fahrenden Fahrzeugs 200 darstellen. Das Umgebungsmodell 112 kann insbesondere eine Position der Vorrichtung 100, eine Position der zumindest einen Objekts 108 und eine Distanzschätzung zwischen der Position der Vorrichtung 100 und dem zumindest einen Objekt 108 zu einem aktuellen Zeitpunkt, beispielsweise zu einem ersten Zeitpunkt t=0, umfassen.

Im Bereich Simulation 190 in Figur 3 kann zu zeitlich diskreten Vorhersagezeitpunkten, beispielsweise an zukünftigen Zeitpunkten t1=1, t2=2, etc. ein Status der Umgebung 132 zu diesen Zeitpunkten ermittelt werden. Insbesondere kann mittels der Steuer- und Datenverarbeitungseinheit 106 ein Positionsbereich 118 des zumindest einen Objekts 108 zu einem zweiten Zeitpunkt in dem Umgebungsmodell 112 basierend auf dem Objektmodell 120 des zumindest einen Objekts 108 und einen Fahrweg 122 des autonom fahrenden Fahrzeugs 200 bestimmt werden, wobei der Fahrweg 122 überschneidungsfrei zu dem Positionsbereich 118 des zumindest einen Objekts 108 verläuft. Zusätzlich können Steuersignale für eine Navigation des autonom fahrenden Fahrzeugs 200 basierend auf dem Fahrweg 122 durch die Steuer- und Datenverarbeitungseinheit 106 erzeugt werden, um das Fahrzeug 200 entlang des Fahrwegs 122 um den Positionsbereich 118 und somit um das zumindest eine Objekt 108 herum zu lenken.

Allgemein können auf Basis des aktuellen Status des Umgebungsmodells 112 (inklusive aller Teilmodelle) zukünftige Stati, z. B. eine zukünftige Position des zumindest einen Objekts 108, zu einem zukünftigen Zeitpunkt t+n, n=1, 2, 3, etc. basierend auf Simulationsparametern simuliert werden. Die Simulationsparameter können zukünftige Zeitpunkte umfassen, zu denen der Status des zumindest einen Objekts 108 simuliert werden soll.

Es kann beispielsweise simuliert werden, dass sich ein Mensch mit einer gegebenen Geschwindigkeit durch einen Raum bewegt. Das Umgebungsmodell 112 kann dann beschreiben, dass ein Objekt 108 vom Typ "Mensch", d.h. ein Objekt 108 der Objektklasse 110 "Mensch", sich kontinuierlich durch den Raum, beispielsweise in der Umgebung 132 des autonom fahrenden Fahrzeugs 200, bewegt, es also keine Positionssprünge geben kann. Wenn die Position, die Bewegungsrichtung und die Geschwindigkeit der Person zu einem ersten Zeitpunkt t0=0 bekannt sind kann die Position der Person zu einem zweiten Zeitpunkt t1=t+1 angenommen bzw. simuliert werden.

Aus der Simulation 190 und einem aktuellen Status der Vorrichtung 100 und der Objekte 108 können Handlungen oder Einschränkungen für das autonom fahrende Fahrzeug 200 abgeleitet werden. Dabei kann eine stetige Synchronisierung des Umgebungsmodells 112 mit weiter aufgenommenen Sensordaten 104 und evtl. auch eine dynamische Anpassung des Umgebungsmodells 112 und dessen Teilmodellen erfolgen.

Insbesondere kann die Steuer- und Datenverarbeitungseinheit 106 dazu ausgebildet sein, den Fahrweg 122 des autonom fahrenden Fahrzeugs 200 basierend auf der ersten Position und/oder der zweiten Position der Vorrichtung 100 sowie einer Distanzschätzung der Vorrichtung 100 zu dem zumindest einen Objekt 108 und einer Ausrichtung der Vorrichtung 100 zu dem zumindest einen Objekt 108 zu bestimmen. Aus den Informationen der Position des autonom fahrenden Fahrzeugs 200 sowie aus Abstand und Richtung des autonom fahrenden Fahrzeugs 200 zu einem Objekt 108, beispielsweise einem Hindernis oder eine Person, zu einem jetzigen Zeitpunkt (t0=0) und den simulierten zukünftigen diskreten Zeitpunkten (tn=t+n, n=1, 2, 3, ...) kann eine neuer Pfad (Trajektorie/Fahrweg) zum Erreichen des Zielpunkts berechnet werden.

So kann die Aufenthaltswahrscheinlichkeit des zumindest einen Objekts 108 zu zukünftigen Zeitpunkten den besten Pfad oder Fahrweg des autonom fahrenden Fahrzeugs 200 maßgeblich beeinflussen. Insbesondere kann ein Ausweichpfad, d.h. ein neuer Fahrweg 122 des autonom fahrenden Fahrzeugs 200, ermittelt werden, wenn ein ursprünglicher Fahrweg 130 des autonom fahrenden Fahrzeugs 200 den Positionsbereich 118 schneidet bzw. kreuzt, d.h. der ursprüngliche Fahrweg 130 verläuft durch den Positionsbereich 118. Die Berechnung des Ausweichpfads bzw. des Fahrwegs 122 kann in zeitlich diskreten Vorhersageintervalle (t1, t2, t3, etc.) erfolgen. Eine Anpassung der Vorhersage des neuen Fahrwegs 122 kann von der aktuellen Position der Vorrichtung 100 bzw. des autonom fahrenden Fahrzeugs 200 erfolgen. Die Vorhersage kann auf Regeln basieren, welche z.B.: durch statistische Modelle umgesetzt sein können.

Aus der Pfadplanung oder Fahrwegplanung kann ein lokaler Bewegungsvektor 162 (siehe Fig. 4) mit Richtung und Geschwindigkeit abgeleitet werden (z. B. tangential zum Fahrweg 122). Der Bewegungsvektor 162 kann dann wiederum direkt in ein (An-)Steuerungssignal eines Aktors 164 (siehe Fig. 4) des autonom fahrenden Fahrzeugs 200 eingehen.

Figur 4 zeigt ein Ausführungsbeispiel einer Systemarchitektur zur Fahrwegplanung eines autonom fahrenden Fahrzeugs 200. Die Sensordaten 104 können Objektdaten und Umgebungsdaten 148 umfassen. Basierend auf den Umgebungsdaten 148 kann das Umgebungsmodell 112 mittels der Steuer- und Datenverarbeitungseinheit 106 erzeugt werden.

Die Sensordaten 104, insbesondere die Objektdaten, können zur Objekterkennung, d.h. zur Erkennung des zumindest einen Objekts 108, verwendet werden. Die Objektklassifizierung 160 kann jedem erkannten Objekt 108 einer Objektklasse 110 zuordnen. Die bekannten oder vorbestimmten Objektklassen 110 können in einem Speicher gespeichert sein. Die erkannten und klassifizierten Objekte 108 können Eingangsgröße des Objektmodells 120 sein. Alle erkannten und klassifizierten Objekte können in einer Datenhaltungsschicht abgelegt werden. Die Datenhaltungsschicht selbst kann beliebig organisiert sein (z.B. relationale Datenbank, verkettete Liste, Graph, etc.). Objekte 108, die erkannt werden aber nicht klassifiziert werden können, können auf ein Basisobjekt gemapped, d.h. einem Basisobjekt zugeordnet werden, welches nur mit sehr grundlegenden Objektmodellen und weiteren Parametern angereichert werden kann.

Das Objektmodell 120 kann zusätzlich Daten aus der Wissensdatenbank 158 empfangen. Die Wissensdatenbank 158 (knowledge base) kann ein Körpermodell umfassen, welches beispielsweise angibt wie ein Mensch "aussieht", d.h. parametrisiert werden soll. Die Wissensdatenbank 158 kann ferner eine monekulare Tiefenschätzung mittels eines monekularen Distanzmodells umfassen, welches angibt wie menschliche Größenverhältnisse mit einem Abstand zu skalieren sind. Insbesondere kann die Wissensdatenbank 158 eine Positionsschätzung, eine Distanzschätzung, eine Geschwindigkeitsschätzung und/oder physikalische Eigenschaften des zumindest einen Objekts 108 umfassen. Die Wissensdatenbank 158 kann auch Variablen umfassen, z.B. eine typische Bewegungsgeschwindigkeit einer Person.

Zusätzlich kann das Objektmodell 120 Daten von dem Verhaltensmodell 156 empfangen. Das Verhaltensmodell 156 kann die Bewegung des einen erkannten und klassifizierten Objekts 108 oder mehrerer erkannter und klassifizierter Objekte 108 bestimmen.

Die Steuer- und Datenverarbeitungseinheit 106 (siehe Fig. 2) kann ausgebildet sein, eine erste Position 114 des zumindest einen Objekts 108 zu einem ersten Zeitpunkt (z.B. t0=0) und eine zweite Position 116 des zumindest einen Objekts 108 zu einem zweiten Zeitpunkt (z.B. t1=1, t2=2 oder t3=3) zu bestimmen, wobei die erste Position 114 des zumindest einen Objekts 108 basierend auf den Sensordaten 104 und die zweite Position 116 des zumindest einen Objekts 108 mittels des Objektmodells 120, insbesondere mittels Daten aus dem Verhaltensmodell 156, bestimmt werden können.

Ferner kann das Objektmodell 120 Positionsdaten 152 der Vorrichtung 100 empfangen. Die Positionsdaten 152, z. B. eine Position 154 der Vorrichtung 100 können mittels der Steuer- und Datenverarbeitungseinheit 106, insbesondere mittels der Positionseinheit 140 der Vorrichtung 100 ermittelt werden. Die Steuer- und Datenverarbeitungseinheit 106 und/oder die Positionseinheit 140 kann dazu ausgebildet sein, eine erste Position 154 der Vorrichtung 100 zu dem ersten Zeitpunkt und eine zweite Position der Vorrichtung 100 zu dem zweiten Zeitpunkt zu bestimmen.

Die Positions- und Bewegungsdaten des Objekts 108 können in dem Sensorkoordinatensystem 134 (siehe Fig. 2) und die Positionsdaten 152, insbesondere die Position 154 der Vorrichtung 100, können in dem Vorrichtungskoordinatensystem 136 (siehe Fig. 2) vorliegen. Die Positions- und Bewegungsdaten des Objekts 108 können mittels der Transformationseinheit 146 von dem Sensorkoordinatensystem 134 in das Weltkoordinatensystem 138 transformiert werden. Die Positionsdaten 152 der Vorrichtung 100 können mittels der Transformationseinheit 146 von dem Vorrichtungskoordinatensystem 136 in das Weltkoordinatensystem 138 transformiert werden.

In der Simulation 190 können sowohl die Positions- und Bewegungsdaten des Objekts 108, als auch die Positionsdaten 152 der Vorrichtung 100 in das Umgebungsmodell 112 integriert werden. Die Simulation 190 kann zusätzliche Simulationsparameter 166, wie beispielsweise eine Anzahl der zu berechnenden bzw. zu simulierenden Zeitpunkte (look ahead time) empfangen. Die Anzahl der zu berechnenden bzw. zu simulierenden Zeitpunkte kann angeben, wie weit in die Zukunft ein Verhalten, insbesondere eine Bewegung des Objekts 108 oder der Positionsbereich 118 des Objekts 108 bestimmt werden soll.

In Figur 4 ist beispielhaft die Simulation des Verhaltens von drei Objekten 108 gezeigt. Die Zustandsdaten 192, 196, 197 des ersten, zweiten und dritten Objekts zu einem ersten Zeitpunkt t0=0, insbesondere Positionsdaten des ersten, zweiten und dritten Objekts können beispielsweise basierend auf den Sensordaten 104 mittels monokularen Tiefenschätzung ermittelt werden. Zustandsdaten 193, 194, 195 des ersten Objekts, insbesondere Positionsdaten des ersten Objekts zu einem zweiten Zeitpunkt, z.B. t1=1, t2=2 oder t3=3 können basierend auf dem geschätzten Verhalten des ersten Objekts, beispielsweise basierend auf Daten des Verhaltensmodells 156, ermittelt werden. Entsprechend können auch Zustandsdaten des zweiten und dritten Objekts, insbesondere Positionsdaten des zweiten und dritten Objekts zu den zweiten Zeitpunkten t1=1, t2=2 und t3=3 basierend auf dem geschätzten Verhalten des zweiten und dritten Objekts, beispielsweise basierend auf Daten des Verhaltensmodells 156, ermittelt werden. Die Zustandsdaten eines Objekts zu einem Zeitpunkt können die Vorhersage bzw. Ermittlung der Zustandsdaten eines anderen Objekts zu einem zukünftigen Zeitpunkt beeinflussen.

Auf Basis der Zustandsdaten, insbesondere der Positionsdaten der Objekte 108 zu den zweiten Zeitpunkten t1=1, t2=2 und t3=3 kann ein jeweiliger Positionsbereich 118 der Objekte 108 in dem Umgebungsmodell 112 ermittelt werden. Insbesondere kann die Steuer- und Datenverarbeitungseinheit 106 dazu ausgebildet sein, den jeweiligen Positionsbereich 118 basierend auf den Positionen der Objekte 108 zu den zweiten Zeitpunkten t1=1, t2=2 und/oder t3=3 und Fehlertoleranzen zu bestimmen.

Ungenauigkeiten können in allen beschriebenen Teilschritten bzw. Bereichen, insbesondere in der Bildaufnahme 150, der Objektklassifikation 160, der Informationsverdichtung 170, der Modellierung 180 und der Simulation 190 vorliegen.

In der Bildaufnahme 150 können die Sensordaten 104 mit einem Messfehler und/oder Quantifizierungsfehlern versehen sein. In der Objektklassifikation 160 kann die Zuordnung eines Objekts 108 zu einer Objektklasse 110 mit einer Unsicherheit erfolgen. In der Informationsverdichtung 170 kann das Ermitteln der zusätzlichen Informationen Annahmen und Ungenauigkeiten unterliegen. Beispielsweise kann es Gesichter geben, die schmaler als 13,5 cm und breiter als 17 cm sind. In der Modellierung 180 können die verwendeten Modelle den Sachverhalt nur auf einer abstrahierten Ebene abbilden. Fehlannahmen bezüglich des Modells können sich auf die Güte des Ergebnisses auswirken. In der Simulation 190 können Fehler auftreten, da die Simulation nicht infinitesimal erfolgt.

Die Abweichungen bzw. Ungenauigkeiten in der Bildaufnahme 150, der Objektklassifikation 160, der Informationsverdichtung 170, der Modellierung 180 und der Simulation 190 können einen Unsicherheitsbereich für die Position des Objekts 108 zu dem zweiten Zeitpunkt ergeben, den es zu beachten gilt. Deshalb wird nicht nur ein Punkt als mögliche Position des Objekts 108 zu dem zweiten Zeitpunkt umfahren, sondern ein ganzer Positionsbereich 118.

Basierend auf dem so ermittelten Positionsbereich 118 kann ein Fahrweg 122, insbesondere ein Ausweichpfad, des autonom fahrenden Fahrzeugs 200 bestimmt werden. Der Fahrweg 122 verläuft überschneidungsfrei zu dem Positionsbereich 118. Steuersignale können basierend auf dem Fahrweg 122 erzeugt werden, wobei die Steuersignale für die Navigation des autonom fahrenden Fahrzeugs 200 basierend auf einem lokalen Bewegungsvektor 162 mit Richtung und Geschwindigkeit, abgeleitet von dem ermittelten Fahrweg 122, ermittelt werden können. Die Steuersignale können einen Aktor 164, beispielsweise eine Lenkung des autonom fahrenden Fahrzeugs 200 steuern und somit das autonom fahrende Fahrzeug 200 um den zumindest einen Positionsbereich 118 herum steuern, ohne dass das Fahrzeug 200 anhalten muss, um eine Kollision mit dem zumindest einen Objekt 108 zu vermeiden.

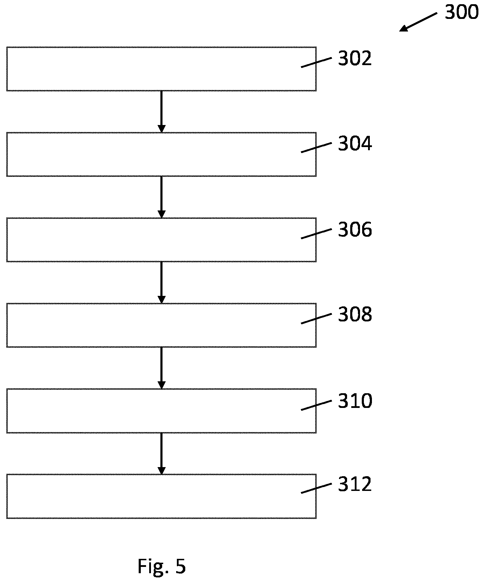

Figur 5 zeigt ein Flussdiagramm, welches ein Verfahren 300 zur Fahrwegplanung eines autonom fahrenden Fahrzeugs 200 beschreibt. In einem ersten Verfahrensschritt 302 erfolgt ein Empfangen, mittels einer Sensoreinheit 102, von Sensordaten 104 einer Umgebung 132 eines autonom fahrenden Fahrzeugs 200. In einem zweiten Verfahrensschritt 304 erfolgt ein Bestimmen zumindest eines Objekts 108 und klassifizieren des zumindest einen Objekts 108 in eine Objektklasse 110, mittels einer Steuer- und Datenverarbeitungseinheit 106, basierend auf den Sensordaten 104. In einem dritten Verfahrensschritt 306 erfolgt ein Erstellen, mittels der Steuer- und Datenverarbeitungseinheit 106, eines Umgebungsmodells 112 basierend auf den Sensordaten 104, wobei das zumindest eine Objekt 108 an einer ersten Position 114 des zumindest einen Objekts 108 zu einem ersten Zeitpunkt in das Umgebungsmodell 112 eingebettet ist. In einem vierten Verfahrensschritt 308 erfolgt ein Bestimmen, mittels der Steuer- und Datenverarbeitungseinheit 106, eines Positionsbereich 118 des zumindest einen Objekts 108 zu einem zweiten Zeitpunkt in dem Umgebungsmodell 112 basierend auf einem Objektmodell 120 des zumindest einen Objekts 108. In einem fünften Verfahrensschritt 310 erfolgt ein Bestimmen, mittels der Steuer- und Datenverarbeitungseinheit 106, eines Fahrwegs 122 des autonom fahrenden Fahrzeugs 200, wobei der Fahrweg 122 überschneidungsfrei zu dem Positionsbereich 118 des zumindest einen Objekts 108 verläuft. In einem sechsten Verfahrensschritt 312 erfolgt ein Erzeugen, mittels der Steuer- und Datenverarbeitungseinheit 106, von Steuersignalen für eine Navigation des autonom fahrenden Fahrzeugs 200 basierend auf dem Fahrweg 122.

Die Erfindung befasst sich mit dem Problem der sicheren und effizienten Fahrwegplanung für autonom fahrende Fahrzeuge, insbesondere fahrerlose Transportfahrzeuge, in dynamischen Umgebungen. Insbesondere liefert die Erfindung Verbesserungen in der Erkennung und Klassifizierung von Objekten in der Umgebung des Fahrzeugs sowie in der präzisen Vorhersage (in anderen Worten: Simulation) ihrer Bewegungen. Es werden Simulation und Objekterkennung verknüpft und zu diskreten Zeitpunkten wird innerhalb einer vorgebbaren Zeit eine konkrete Abbildung der Umgebung inkl. dem autonom fahrenden Fahrzeug in dem Umgebungsmodell erzeugt. Dies kann dadurch ermöglicht werden, in dem jedes erkannte und klassifizierte Objekt einzeln mit weiteren Modelldaten und Attributen, d.h. zusätzlichen Informationen, hinterlegt werden kann.

Das autonom fahrende Fahrzeug kann in Echtzeit auf sich ändernde Umgebungsbedingungen reagieren und gleichzeitig einen Fahrweg planen der sicherstellt, dass keine Kollisionen mit anderen Objekten auftreten. Dies wird durch eine genaue Bestimmung der Positionen und Bewegungsbereiche von Objekten in einer Umgebung des autonom fahrenden Fahrzeugs sowie einer Integration dieser Informationen in ein Umgebungsmodell ermöglicht, um eine sichere und zuverlässige Navigation des autonom fahrenden Fahrzeugs zu gewährleisten.

Somit kann eine dem autonom fahrenden Fahrzeug zur Verrichtung einer Aufgabe vorgegebene Wegstrecke dynamisch so angepasst werden, dass das autonom fahrende Fahrzeug nicht wie bisher üblich wegen eines Hindernisses stoppt, sondern dem Hindernis ausweicht, d.h. die vorgegebene Wegstrecke zur Zielerreichung anpasst.

Die Erfindung ist insbesondere für ein autonomes Fahrzeug (AGV) für den Einsatz in der Logistik- und Fabrikautomation vorteilhaft. Das AGV weist Sensorik insbesondere eine Sensoreinheit auf, um Objekte in einer Umgebung, z.B. einem Raum, zu erkennen und um Umgebungsdaten zu sammeln. Die Sensordaten können Objektdaten und Umgebungsdaten umfassen. Basierend auf den Umgebungsdaten wird ein Umgebungsmodell, in anderen Worten: ein live Weltmodell, erstellt. Die Erstellung des Weltmodells kann die Position des AGV's im Weltmodell, die Erkennung und Klassifizierung von Objekten und die Berechnung von einem Abstand (Distanzschätzung) zwischen einer AGV Position und einem bestimmten Objekt umfassen. Basierend auf dem Weltmodell kann der Fahrweg des AGV's geplant werden, so dass erkannte Objekte umfahren werden können.

Die Erfindung ist nicht auf die beschriebenen Ausführungsformen beschränkt. Beispielsweise können die erfindungsgemäße Vorrichtung und das Verfahren auch für industrielle Roboter verwendet werden. Der Fahrweg kann dabei einem Weg eines Roboterarms beschreiben.

Im Rahmen der Erfindung sind alle beschriebenen und/oder gekennzeichneten Merkmale beliebig miteinander kombinierbar. So sind beispielsweise kombinierte Umgebungsmodelle mehrere autonom fahrender Fahrzeuge mit jeweiligen Ausweichstrategien die jeder Objektklasse zugeordnet werden können möglich.

### Bezugszeichenliste

- 100: Vorrichtung zur Fahrwegplanung eines autonom fahrenden Fahrzeugs
- 102: Sensoreinheit
- 104: Sensordaten
- 105: Bild
- 106: Steuer- und Datenverarbeitungseinheit
- 108: Objekt
- 110: Objektklasse
- 112: Umgebungsmodell
- 114: erste Position des Objekts
- 116: zweite Position des Objekts
- 118: Positionsbereich
- 120: Objektmodell
- 122: Fahrweg
- 124: neuronales Netz
- 126: Blickrichtung
- 128: Zielpunkt
- 130: ursprünglicher Fahrweg
- 132: Umgebung
- 134: Sensorkoordinatensystem
- 136: Vorrichtungskoordinatensystem
- 138: Weltkoordinatensystem
- 140: Positionseinheit
- 142: Kommunikationseinheit
- 144: Cloud Server
- 146: Transformationseinheit
- 148: Umgebungsdaten
- 150: Bildaufnahme
- 152: Positionsdaten
- 154: Position der Vorrichtung
- 156: Verhaltensmodell
- 158: Wissensdatenbank
- 160: Objektklassifikation
- 162: Bewegungsvektor
- 164: Aktor
- 166: Simulationsparameter
- 170: Informationsverdichtung
- 180: Modellierung
- 190: Simulation
- 192: Zustandsdaten Objekt 1 zum Zeitpunkt t=0
- 193: Zustandsdaten Objekt 1 zum Zeitpunkt t=1
- 194: Zustandsdaten Objekt 1 zum Zeitpunkt t=2
- 195: Zustandsdaten Objekt 1 zum Zeitpunkt t=3
- 196: Zustandsdaten Objekt 2 zum Zeitpunkt t=0
- 197: Zustandsdaten Objekt 3 zum Zeitpunkt t=0

- 200: Autonom fahrendes Fahrzeug
- 202: Kamera
- 204: Lidar Sensor

- 300: Verfahren zur Fahrwegplanung eines autonom fahrenden Fahrzeugs
- 302: Verfahrensschritt: Empfangen von Sensordaten einer Umgebung eines autonom fahrenden Fahrzeugs
- 304: Verfahrensschritt: Bestimmen und Klassifizieren zumindest eines Objekts basierend auf den Sensordaten
- 306: Verfahrensschritt: Erstellen eines Umgebungsmodells basierend auf den Sensordaten
- 308: Verfahrensschritt: Bestimmen eines Positionsbereich des zumindest einen Objekts in dem Umgebungsmodell
- 310: Verfahrensschritt: Bestimmen eines Fahrwegs des autonom fahrenden Fahrzeugs basierend auf dem Positionsbereich
- 312: Verfahrensschritt: Erzeugen von Steuersignalen für eine Navigation des autonom fahrenden Fahrzeugs basierend auf dem Fahrweg

## Patentansprüche

1. Vorrichtung (100) zur Fahrwegplanung eines autonom fahrenden Fahrzeugs (200), umfassend:
eine Sensoreinheit (102), dazu ausgebildet, Sensordaten (104) einer Umgebung (132) eines autonom fahrenden Fahrzeugs (200) zu empfangen;
eine Steuer- und Datenverarbeitungseinheit (106), dazu ausgebildet,
zumindest ein Objekt (108) basierend auf den Sensordaten (104) zu bestimmen und in eine Objektklasse (110) zu klassifizieren;
ein Umgebungsmodell (112) basierend auf den Sensordaten (104) zu erstellen, wobei das zumindest eine Objekt (108) an einer ersten Position (114) des zumindest einen Objekts (108) zu einem ersten Zeitpunkt in das Umgebungsmodell (112) eingebettet ist;
einen Positionsbereich (118) des zumindest einen Objekts (108) zu einem zweiten Zeitpunkt in dem Umgebungsmodell (112) basierend auf einem Objektmodell (120) des zumindest einen Objekts (108) zu bestimmen; und
einen Fahrweg (122) des autonom fahrenden Fahrzeugs (200) zu bestimmen und Steuersignale für eine Navigation des autonom fahrenden Fahrzeugs (200) basierend auf dem Fahrweg (122) zu erzeugen,
wobei der Fahrweg (122) überschneidungsfrei zu dem Positionsbereich (118) des zumindest einen Objekts (108) verläuft.

2. Vorrichtung (100) nach Anspruch 1, wobei die Steuer- und Datenverarbeitungseinheit (106) zumindest ein neuronales Netz (124) umfasst, dazu ausgebildet, das zumindest eine Objekt (108) basierend auf den Sensordaten (104) zu bestimmen und in eine Objektklasse (110) zu klassifizieren.

3. Vorrichtung (100) nach einem der Ansprüche 1 oder 2, wobei die Steuer- und Datenverarbeitungseinheit (106) ausgebildet ist, mittels des Objektmodells (120) zusätzliche Informationen des zumindest einen Objekts (108) zu bestimmen.

4. Vorrichtung (100) nach Anspruch 3, wobei das Objektmodell (120) ein neuronales Netz umfasst.

5. Vorrichtung (100) nach Anspruch 3, wobei die Steuer- und Datenverarbeitungseinheit (106) ausgebildet ist, die zusätzlichen Informationen mittels des Objektmodells (120) basierend auf Daten einer Wissensdatenbank (158) zu dem zumindest einen Objekt (108) zu bestimmen.

6. Vorrichtung (100) nach einem der Ansprüche 3 bis 5, wobei die zusätzlichen Informationen eine Distanzschätzung der Vorrichtung (100) zu dem zumindest einen Objekt (108) umfasst.

7. Vorrichtung (100) nach Anspruch 6, wobei die Distanzschätzung mittels einer monokularen Tiefenschätzung erfolgt.

8. Vorrichtung (100) nach zumindest einem der Ansprüche 1 bis 7, wobei die Steuer- und Datenverarbeitungseinheit (106) ausgebildet ist, eine erste Position (154) der Vorrichtung (100) zu dem ersten Zeitpunkt und eine zweite Position der Vorrichtung (100) zu dem zweiten Zeitpunkt zu bestimmen.

9. Vorrichtung (100) nach Anspruch 8, wobei die Steuer- und Datenverarbeitungseinheit (106) ausgebildet ist, den Fahrweg (122) des autonom fahrenden Fahrzeugs (200) basierend auf der ersten Position und/oder der zweiten Position der Vorrichtung (100) sowie einer Distanzschätzung der Vorrichtung (100) zu dem zumindest einen Objekt (108) und einer Ausrichtung der Vorrichtung (100) zu dem zumindest einen Objekt (108) zu bestimmen.

10. Vorrichtung (100) nach zumindest einem der Ansprüche 1 bis 9, wobei die Steuer- und Datenverarbeitungseinheit (106) ausgebildet ist, die erste Position (114) des zumindest einen Objekts (108) zu dem ersten Zeitpunkt und eine zweite Position (116) des zumindest einen Objekts (108) zu dem zweiten Zeitpunkt zu bestimmen, wobei die erste Position (114) des zumindest einen Objekts (108) basierend auf den Sensordaten (104) und die zweite Position (116) des zumindest einen Objekts (108) mittels des Objektmodells (120) bestimmt werden.

11. Vorrichtung (100) nach Anspruch 10, wobei die Steuer- und Datenverarbeitungseinheit (106) ausgebildet ist, den Positionsbereich (118) basierend auf der zweiten Position (116) des zumindest einen Objekts (108) und Fehlertoleranzen zu bestimmen.

12. Vorrichtung (100) nach zumindest einem der Ansprüche 1 bis 11, wobei das Umgebungsmodell (112) eine Position (154) der Vorrichtung (100), insbesondere eine Position des autonom fahrenden Fahrzeugs (200), und eine Distanzschätzung zwischen der Position (154) der Vorrichtung (100) und dem zumindest einen Objekt (108) umfasst.

13. Vorrichtung (100) nach zumindest einem der Ansprüche 1 bis 12, wobei die Sensoreinheit (102) einen oder mehrere Sensoren, insbesondere optoelektronische Sensoren, umfasst.

14. Verfahren (300) zur Fahrwegplanung eines autonom fahrenden Fahrzeugs (200) umfassend:
Empfangen (302), mittels einer Sensoreinheit (102), von Sensordaten (104) einer Umgebung (132) eines autonom fahrenden Fahrzeugs (200);
Bestimmen (304) zumindest eines Objekts (108) und klassifizieren des zumindest einen Objekts (108) in eine Objektklasse (110), mittels einer Steuer- und Datenverarbeitungseinheit (106), basierend auf den Sensordaten (104);
Erstellen (306), mittels der Steuer- und Datenverarbeitungseinheit (106), eines Umgebungsmodells (112) basierend auf den Sensordaten (104), wobei das zumindest eine Objekt (108) an einer ersten Position (114) des zumindest einen Objekts (108) zu einem ersten Zeitpunkt in das Umgebungsmodell (112) eingebettet ist;
Bestimmen (308), mittels der Steuer- und Datenverarbeitungseinheit (106), eines Positionsbereich (118) des zumindest einen Objekts (108) zu einem zweiten Zeitpunkt in dem Umgebungsmodell (112) basierend auf einem Objektmodell (120) des zumindest einen Objekts (108);
Bestimmen (310), mittels der Steuer- und Datenverarbeitungseinheit (106), eines Fahrwegs (122) des autonom fahrenden Fahrzeugs (200), wobei der Fahrweg (122) überschneidungsfrei zu dem Positionsbereich (118) des zumindest einen Objekts (108) verläuft; und
Erzeugen (312), mittels der Steuer- und Datenverarbeitungseinheit (106), von Steuersignalen für eine Navigation des autonom fahrenden Fahrzeugs (200) basierend auf dem Fahrweg (122).

15. Autonom fahrendes Fahrzeug (200), insbesondere in Form eines fahrerlosen Transportfahrzeugs, wobei das autonom fahrende Fahrzeug (200) eine Vorrichtung (100) gemäß einem der Ansprüche 1 bis 13 umfasst.
